# EUROPEAN PATENT APPLICATION

(11) **EP 4 187 154 A1**
(43) Date of publication of application: **31.05.2023**
(21) Application number: 22210030.7
(22) Date of filing: 28.11.2022
(51) Int. Cl.: F23R 3/10, F23D 11/38, F23R 3/14, F23R 3/16, F23R 3/26, F23R 3/28

(54) **FUEL NOZZLE WITH RESTRICTED CORE AIR PASSAGE**

(30) Priority: 26.11.2021 US 202117535852
(71) Applicant: PRATT & WHITNEY CANADA CORP., Longueuil, Québec J4G 1A1 (CA)
(72) Inventor: HU, Tin-Cheung John, (01BE5) Longueuil J4G 1A1 (CA)
(74) Representative: Dehns

(57) **Abstract**

A fuel nozzle (100) for a combustor (16) of an aircraft engine (10) includes a nozzle body (102) defining an a fuel passage (106), extending therethrough between a fuel inlet and a fuel outlet located at the outlet end that at least partially defines a nozzle tip (108), for directing a fuel flow into the combustor (16) via the nozzle tip (108). A core air passage (103) extends through the nozzle body (102) for directing a core airflow (118) into the combustor (16) via the nozzle tip (108). At least two flow restrictors (120) are disposed in series within the core air passage (103), the flow restrictors (120) including an upstream flow restrictor (121) and a downstream flow restrictor (123) each having an orifice (130) therein. The restricted air flow passage has a cross-sectional area smaller than that of the core air passage (103). The orifice (130) in the upstream flow restrictor (121) is at least partially offset from the orifice (130) in the downstream flow restrictor.

## Description

### TECHNICAL FIELD

The disclosure (invention) relates generally to aircraft engine combustors and, more particularly, to fuel nozzles used in such combustors.

### BACKGROUND

Aircraft engines combustors, such as those used in gas turbine engines, employ a plurality of fuel nozzles to spray fuel into a combustion chamber. The fuel nozzles atomize the fuel and mix it with air for combustion in the combustion chamber. Existing fuel nozzles typically include peripheral air swirlers at the nozzle tip to create a swirling motion that mixes fuel jets and air streams injected into the combustion chamber. This causes a local recirculation of the mixed air/fuel immediately downstream of each of the nozzle tips.

A certain amount of such local recirculation of the mixed air/fuel adjacent the fuel nozzle tips can be desirable, because it causes some heat to come back to the nozzle tip face which in turn helps to heat up the fuel and fresh air as they are being injected. This can help to maintain flame stability within the combustor. However, if the local recirculation of the mixed air/fuel within the combustion chamber proximate the fuel nozzle tips is such that too much fuel and/or heat is returned to the nozzle tip, the nozzle face can become sooty and unwanted carbon (e.g. coking) may build-up in and/or on the nozzle tips.

### SUMMARY

According to an aspect of the invention, a fuel nozzle for a combustor of an aircraft engine, comprises: a nozzle body defining an axial central axis and having an outlet end at least partially defining a nozzle tip; a fuel passage extending through the nozzle body between a fuel inlet and a fuel outlet located at the outlet end, for directing a fuel flow into the combustor via the nozzle tip; a core air passage extending through the nozzle body between a core air inlet and a core air outlet located at the outlet end, for directing a core air flow into the combustor via the nozzle tip; and at least two flow restrictors disposed in series within the core air passage, the at least two flow restrictors including an upstream flow restrictor and a downstream flow restrictor each having an orifice therein, the orifice defining a restricted air flow passage through a respective one of the at least two flow restrictors, the restricted air flow passage having a cross-sectional area smaller than that of the core air passage, the orifice in the upstream flow restrictor being at least partially offset from the orifice in the downstream flow restrictor.

According to an aspect of the invention, an aircraft engine comprises: a combustor; and a plurality of fuel nozzles having nozzle tips projecting inside the combustor for injecting an air-fuel mixture into the combustor, the fuel nozzles including: a nozzle body having a core air passage defined therein and extending centrally through the nozzle body in an axial direction from a core air inlet to a core air outlet at an outlet of the fuel nozzle; and at least two flow restrictors located within the core air passage, downstream of the core air passage inlet, the at least two flow restrictors disposed in series and including an upstream flow restrictor and a downstream flow restrictor, the upstream flow restrictor and the downstream flow restrictor each having one or more orifices therein, the one or more orifices respectively defining one or more air flow passages through the at least two flow restrictors, the air flow passages having cross-sectional areas less than that of the core air passage, the orifice in the upstream flow restrictor being at least partially offset from the orifice in the downstream flow restrictor.

According to an aspect of the invention, a method is provided for delivering fuel into a combustor of an aircraft engine using a fuel nozzle, the method comprising: directing fuel from a fuel source to a nozzle tip of the fuel nozzle; directing a core air flow through a core air passage extending through the fuel nozzle; and within the core air passage, reducing a velocity of the core air flow by restricting the core air flow using at least two flow restrictors disposed in series within the core air passage, the at least two flow restrictors respectively including an upstream orifice and a downstream orifice, and decreasing a pressure drop across the downstream orifice.

### BRIEF DESCRIPTION OF THE DRAWINGS

Reference is now made to the accompanying figures in which:
FIG. 1 is a schematic cross sectional view of an aircraft engine, in this case a gas turbine engine;
FIG. 2 is a schematic cross-sectional view of a fuel nozzle of the fuel system of the aircraft of FIG. 1, the fuel nozzle having core air restrictors within a nozzle core air passage;
FIG. 3A is a front view of several configurations of the first core air restrictors of the fuel nozzle of FIG. 2;
FIG. 3B is a front view of several configurations of the second core air restrictors of the fuel nozzle of FIG. 2;
FIG. 3C is a front view of the second core air restrictors of FIG. 3B, shown with the relative position of an orifice of the first core air restrictors of FIG. 3A superimposed thereon;
FIG. 4 is a schematic cross-sectional view of the fuel nozzle of FIG. 2, shown with a core air swirler as the second core air restrictor;
FIG. 5 is a schematic cross-sectional view of a fuel nozzle of the fuel system of the aircraft engine of FIG. 1, having first and second core air restrictors within a nozzle core air passage; and
FIG. 6 is a schematic cross-sectional view of the fuel nozzle of Fig. 5, shown with a core air swirler as the second core air restrictor.

### DETAILED DESCRIPTION

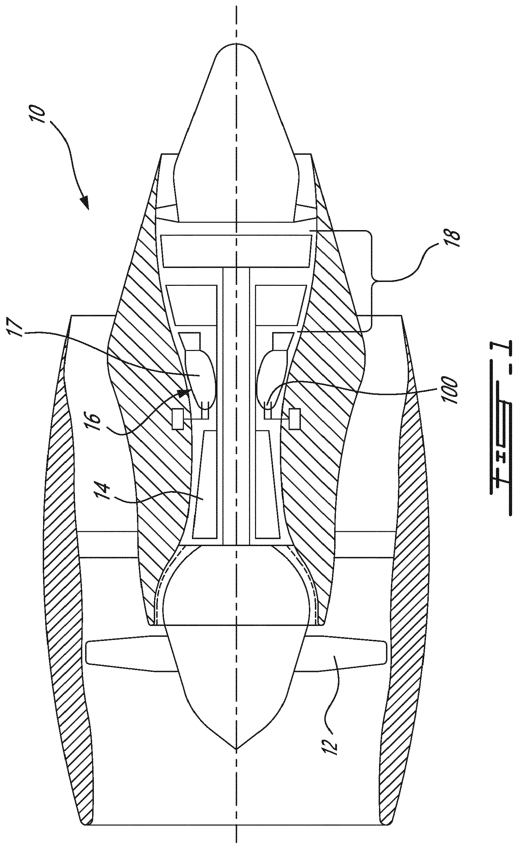

FIG. 1 illustrates an aircraft engine 10, which may for example be a gas turbine engine, of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases.

The aircraft engine 10 has fuel nozzles 100 which supply the combustor 16 with fuel that is mixed with air and combusted within the combustion chamber 17 of the combustor 16 in order to generate the hot combustion gases. The fuel nozzles 100 atomize the fuel and mix it with the air to be combusted within the combustion chamber 17 of the combustor 16. The combustion air and fuel are supplied to the nozzle 100 under pressures suitable for atomization of the fuel. The fuel can be supplied with high pressure for pressure atomizer style fuel nozzles or for high shear fuel nozzles, or can alternately be supplied at lower pressure for air blast style nozzles, providing a fine outputted mixture of the air and fuel may help to ensure a more efficient combustion of the mixture. The fuel nozzles 100 are generally made from a heat resistant metal or alloy because of its position within, or in proximity to, the combustor 16.

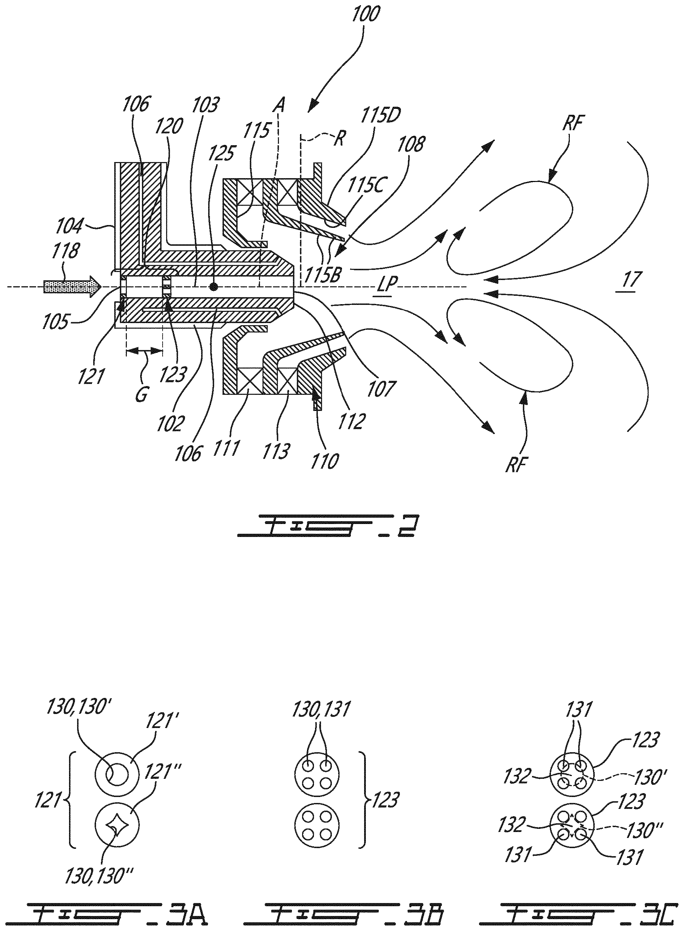

Referring now to FIG. 2, a fuel nozzle 100 of the "high shear" type includes generally a cylindrical nozzle body 102 defining a longitudinally extending, axial central axis A and a radial axis R. The nozzle body 102 is annular and defines a core air passage 103 that is, in at least the depicted embodiment, centrally disposed therewithin and extends through the nozzle body 102 from a core air inlet 105 to a core air outlet 107. In the depicted embodiment, the core air passage 103 extends axially through the nozzle body, concentrically with the axial central axis A. A core air stream 118 flows through the core air passage 103, from the core air inlet 105 to the core air outlet 107. The core air outlet 107 is therefore disposed at a downstream outlet end of the nozzle body, at or within the tip 108 of the nozzle which extends into the combustion chamber 17 of the combustor 16, to inject the fuel-air mixture for combustion. The core air outlet 107 of the core air passage 103 terminates within a peripheral air swirler 110, located at the nozzle tip 108.

One or more fuel passages 106 (which may also be referred to as fuel lines) extend through the nozzle body 102 of the fuel nozzle 100, to deliver fuel originating at a fuel source (e.g. fuel tank, etc. of the fuel system) to deliver fuel to the nozzle tip 108. One or more heat shields 104 may also surround the nozzle body 102 such as to help protect the fuel nozzle 100 from the high temperatures to which they are exposed within the combustion section of the engine.

At the nozzle tip 108, the peripheral air swirler 110 extends annularly about the nozzle body 102 at its downstream end, and may be concentric with the axial central axis A. The peripheral air swirler 110 generates swirl to the air leaving the fuel nozzle. Thus the core air flowing substantially axially through the core air passage 103, parallel to and/or along the axial central axis A, will mix with the swirling air produced by the peripheral air swirler 110. This swirling air motion also acts to shear and rapidly mix the fuel jets or fuel sheet that are injected across or between air streams, via the one or more fuel passages 106.

In certain embodiments, as depicted in Fig. 2 for example, the peripheral air swirler 110 may include multiple sets of air swirlers, arranged radially. For example, inner swirlers 111 and outer swirlers 113 may be provided within the peripheral air swirler 110, each of which is formed by a circumferential array of angularly disposed air passages 115 arranged to create a swirling effect to the air exiting the peripheral air swirler. Generally, the higher the swirl from the inner and outer swirlers 111, 113 of the peripheral air swirler, the wider the spray of fuel into the combustion chamber 17. This swirling air generated by the peripheral air swirler 110 creates a lower pressure zone LP in the fuel/air flow proximate the nozzle tip 108, and encourages flow recirculation FR to the center of the fuel nozzle tip 108 and the fuel/air mixture ejected therefrom.

When the burning and hot flow is directed back closer to the fuel nozzle, due to this recirculation flow RF, the combustion flame produced by the fuel nozzle 100 may be more stable. However, if this flow recirculation RF forces the hot gasses back too close to the fuel nozzle faces 112, 115B, 115C, 115D at the nozzle tip 108, then oxidation and unwanted soot deposition (e.g. coking) on the fuel nozzle faces 112, 115B, 115C, 115D can occur. To mitigate this issue, the core air stream flowing through core air passages in most known fuel nozzles is unobstructed (i.e. the core air passages are bores which extend unobstructed through the nozzle body) and therefore the core air stream tends to be of relatively high velocity. For example, in such conventional unobstructed fuel nozzle core air passages, 100% (or close to 100%) of the pressure drop will occur across the fuel nozzle air hole - meaning that there is little to no flow velocity reduction within the core air passages. This pushes away the recirculating hot and rich fuel-air mixture (i.e. farther from the nozzle tip 108), thus avoiding oxidation of and heavy soot deposition on the fuel nozzle face.

It has however been found that negative combustion performance can result when the recirculating flow RF downstream of the nozzle is pushed too far away from the nozzle tip and into the combustor by the core air stream. This can lead to issues such as poor ignition characteristics, lifting flame when lit that can be unstable leading to potential flameout issues, and/or poor flameout margin, poor flame stability and thermoacoustic issues due to lifted unstable flame.

Accordingly, the fuel nozzles described herein, including the fuel nozzle 100, permit the center recirculation flow RF to be controlled such as to permit improved flame stability. The fuel nozzle(s) described herein are accordingly provided with flow restrictors 120 within the core air passage 103. These flow restrictors 120 act to restrict the core air stream flowing through the core air passage 103, as will be described in further detail below. As will be seen, the flow restrictors within the core air passage 103 act to slow down the nozzle core air flowing through the core air passage 103, such that the air flow exiting the nozzle tip 108 at the core air outlet 107 has a lower velocity than a nozzle without any flow restrictors. In one particular embodiment, the velocity of the air flow exiting the nozzle tip 108 at the core air outlet 107 is lower than a velocity of the core air flow at the core air inlet 105. The flow restrictors 120 therefore slow down the nozzle core air, such that the jet of core air exiting the nozzle tip 108 will be less likely to push the recirculating air away from the nozzle tip or to break up the recirculating region (both of which can occur in existing fuel nozzles that have unobstructed - i.e. non-restricted - core air flow passages). In certain embodiments, the presence of the two flow restrictors 120 located in series within the core air passage 103 may enable the pressure drop across the second (downstream) flow restrictor to be between 10% and 90% pressure drop relative to a reference pressure drop in an unobstructed core air passage. Accordingly, at a minimum only 10% of the pressure drop across the fuel nozzle will be fed through the second of the two flow restrictors 120, thereby slowing down the flow velocity through the core air passage 103. At a maximum, up to 90% of the pressure drop accords the fuel nozzle may occur at the second of the two flow restrictors 120, leading almost all of the core airflow through the fuel nozzle to pass through resulting in high velocity core airflow.

Referring still to Fig. 2, the fuel nozzle 100 includes one or more flow restrictors 120 located within the axially extending core air passage 103 of the fuel nozzle body 102. The flow restrictors 120 increase the pressure losses of the core air flow 118 flowing through the core air passage 103 of the fuel nozzle 100, thereby forming a means of reducing the velocity of the core air flow 118. The relative strength of the center recirculation flow RF at the exist of the fuel nozzle tip 108 can thus be controlled, or positioned as desired, for example such as to not be pushed too far away from the fuel nozzle 108 but still being maintained at a suitable distance away to limit oxidation and unwanted soot and/or carbon depositions (e.g. coking) on the fuel nozzle faces 112, 115B, 115C, 115D.

In the depicted embodiment, two flow restrictors 120 are provided, namely a first, or upstream, flow restrictor 121 and a second, or downstream, flow restrictor 123. The terms "upstream" and "downstream" used in this context are with reference to the direction of the core airflow 118 flowing through the core air passage 103. In certain embodiments, more than two flow restrictors 120 be provided. Regardless of the number of flow restrictors, the flow restrictors 120 (and in this case, the first and second flow restrictors 121 and 123) are disposed in series within the core air passage 103, meaning that all of core air stream 118 flowing through the core air passage 103 must first pass through the first, or upstream, flow restrictor 121, before progressing further downstream through the core air passage to the second, or downstream, flow restrictor 123.

As can be seen in the embodiment of Fig. 2, the first and second flow restrictors 121 and 123 are both located within an upstream half of the core air passage 103, and are thus positioned between the core air inlet 105 and an axial midpoint 125 of the core air passage 103. The axial midpoint 125 is located half-way between the core air inlet 105 and the core air outlet 107. The first and second flow restrictors 121 and 123 are axially spaced apart by a gap G having a selected distance in the axial direction (e.g. relative to the axial central axis A), as will be described in further detail below. However, in other embodiments the first and second flow restrictors 121 and 123 may be located elsewhere within the core air passage 103. For example, both the first and second flow restrictors 121, 123 can be located within the downstream half of the core air passage 103, and thus may be between the axial midpoint 125 and the core air outlet 107. Alternately, the first flow restrictor 121 may be located within the upstream half of the core air passage 103 (between the core air inlet 105 and the axial midpoint 125), and the second flow restrictor 123 may be located within the downstream half of the core air passage 103 (between the axial midpoint 125 and the core air outlet 107).

The gap G, and thus the axial spacing, between the first and second flow restrictors 121 and 123 may be selected as required or desired in order to achieve a particular pressure drop of the core air flow 118 within the core air passage 103. However, in certain embodiments, the second flow restrictor 123 is positioned downstream from the first flow restrictor 121 a distance that is sufficient to permit impingement of the core air flow 118, exiting the aperture(s) in the first flow restrictor 121, onto an upstream surface of the second flow restrictor 123. In a particular embodiment, the second flow restrictor 123 is located within the core air passage 103 an axial distance away from the first flow restrictor 121, the axial distance corresponding to 1 to 5 times a maximum dimension (e.g. the diameter) of the first flow restrictor 121 (and therefore 1 to 5 times the corresponding maximum dimension of the core air passage 103). More preferably, the axial distance between the first and second flow restrictors 121, 123 is 2 to 4 times the maximum dimension (e.g. diameter) of the first flow restrictor 121 (and/or 2 to 4 times the diameter of core air passage 103). More preferably still, the axial distance between the first and second flow restrictors 121, 123 is about 3 times the maximum dimension (e.g. diameter) of the first flow restrictor 121 (and/or about 3 times the diameter of the core air passage 103). These maximum dimensions may, in one embodiment, be the outside diameter (OD) of the first flow restrictor 121. By thus locating the second flow restrictor 123 at such axial locations downstream of the first flow restrictor 121, the core airflow 118 will impinge onto the second flow restrictor 123 and thus generate an optimal total pressure loss.

The flame stability of the fuel nozzle 100 can thereby be more accurately controlled, using the core air flow 118 that is slowed down by the flow restrictors 120, thereby forming a suitable core air mass flow rate while reducing the air flow velocity due to the irreversible pressure losses imparted upon the core air flow 118 by the flow restrictors 120 (121, 123) and the flow impingement impact. In addition, the flow restrictors 120 permit the overall fuel-air ratio at the fuel nozzle, the fuel-air mixedness at the fuel nozzle, the flame stability of the combustion system, the avoidance of soot and/or carbon depositions, and/or the fuel nozzle durability can be optimized, as required by the designer.

Referring now to Figs. 3A to 3C, the flow restrictors 120 (121, 123) will now be described in further detail. As noted above, each of the flow restrictors 120 limits the air flowing therethrough using at least one orifice or aperture 130 that is defined in the body of the restrictor, and through which the core air can flow. In certain embodiments, each of these orifices 30 may extend fully through an axial thickness of the flow restrictors 120.

Fig. 3A depicts two different possible embodiments of the first, or upstream, flow restrictor 121. More particularly, a first flow restrictor 121' includes a single orifice 130' therein, the orifice 130' of the first flow restrictor 121' being circular and centrally located within the outer perimeter of the first flow restrictor 121'. A first flow restrictor 121" includes a single orifice 130" therein, the orifice 130" of the first flow restrictor 121' being in this case star shaped yet still centrally located within the outer perimeter of the first flow restrictor 121". As can be seen in Fig. 3A, these central orifice 130' and 130" are smaller than the total diameter of the first flow restrictors 121' and 121", but remain relatively large in comparison with the orifices in the second flow restrictors 123. While two possible geometries of the central orifices 130' and 130" are depicted in Fig. 3A (namely, circular and star-shaped), it is to be understood that the central orifice 130', 130" may have different cross-sectional and/or perimeter shapes. The size and thus flow area of the central orifice 130', 130" can be adjusted and selected as required, such as to permit a given core air mass flow therethrough.

In certain embodiments, the central orifice 130', 130" in the first flow restrictor 121', 121" has sharp edges (i.e. aerodynamically sharp, and thus not rounded or smoothed edges), both at the entrance and the exit of the orifice 130', 130", respectively formed at the junction between the orifice passage and a transversely extending upstream and downstream face of the flow restrictor 121', 121". These aerodynamically sharp edges are intended to maximize pressure loss and thus maximize the ability of the orifice 130', 130", and thus the flow restrictor 121', 121", to reduce the velocity of the core air flow 118 passing through the flow restrictor 121', 121" as it flows through the core air passage 103. However, radiused or chamfered edges at entrance of orifice 130', 130" can alternately be used, in certain embodiments, if higher discharge coefficients are desirable for more through flows but less pressure losses.

Fig. 3B depicts two identical second, or downstream, flow restrictors 123. The second flow restrictor 123 includes multiple orifices 131 therein. In the depicted embodiment, four orifices 131 are provided, however fewer or more number of orifices may alternately be used. Much as per the single orifice 130', 130" of the first flow restriction 121, each of the multiple orifices 131 of the second flow restrictor 123 allow core air to flow therethrough. In certain embodiments, each of these multiple orifices 131 extends fully through an axial thickness of the second flow restrictor 123. In the depicted embodiment, the orifices 131 of the second flow restrictor 123 are circular in shape, however other possible geometries (e.g. having different cross-sectional and/or perimeter shapes) may alternately be used. In a particular embodiment, such as that shown in Figs. 3A and 3B, each of the individual orifices 131 in the second flow restrictor 123 is smaller (i.e. a smaller cross-sectional area) than the central orifice 130', 130" of the first flow restrictor 121. The size and thus flow area of the orifices 131' can be adjusted and selected as required, such as to permit a given core air mass flow therethrough. In certain embodiments, each of the multiple orifices in the downstream flow restrictor may have a cross-sectional area that is equal to or smaller than a cross-sectional area of the orifice in the upstream flow restrictor.

At least a center of each of the orifices 131 of the second flow restrictor 123 is misaligned (e.g. radially and/or circumferentially) with a corresponding center of the orifices 130', 130" in the first flow restrictor 121 located upstream. Stated differently, a majority of the flow area defined by each of the orifices 131 in the second flow restrictor 123 is at least partially offset from the orifices 130', 130" located further upstream. In a particular embodiment, each orifice 131 in the downstream (second) flow restrictor 123 is entirely offset from the orifice 130', 130" in the upstream (first) flow restrictor 121, such that substantially all air flowing out of the orifice in the upstream flow restrictor will impinge upon a planar surface of the downstream flow restrictor and thus cannot flow uninterrupted through the orifices in the downstream flow restrictor. This offset may be in the radial and/or the circumferential direction. Accordingly, the single orifice 130', 130" of the first flow restrictor 121 is thus aligned (radially and/or circumferentially) with a solid surface (which may, for example, be flat and/or planar) on the body of the second flow restrictor 123 located further downstream, in series, within the core air passage. As such, the air exiting the orifice 130',130" in the first flow restrictor 121 will impinge (or "splash") upon the flat surface of the second flow restrictor 123, before being re-directed outwardly to flow through the multiple orifices 131 in the second flow restrictor 123. This offset of the orifices 130', 130" and 131 (or alternately stated, this alignment of the first orifices 130', 130" with a solid surface on the downstream flow restrictor) may be best visualized in Fig. 3C, wherein the relative position of the single orifice 130', 130" of the first flow restrictor has been superimposed (for explanation purposes) over the second flow restrictor 123. In at least one embodiment, the multiple orifices 131 in the downstream flow restrictor 123 are circumferentially equally spaced apart, and located radially outward from the centrally-located single orifice 130', 130" in the upstream flow restrictor 121.

As can be seen in Fig. 3C, the location of the orifice 130', 130" of the upstream first flow restrictor 121 is such that a majority of the core air exiting these orifices 130', 130" will impinge upon a planar surface 132 on the body of the second flow restrictor 123 (and in this case, at the center of the second flow restrictor 123). Thus, the core air flowing downstream out of the orifices 130', 130" of the first flow restrictor 121 cannot easily, that is without being first diverted or obstructed, flow through the orifices 131 formed in the second flow restrictor 123.

Much as per the central orifice 130', 130" in the first flow restrictor 121', 121", the multiple orifices 131 of the second flow restrictor 123 may also have sharp edges (i.e. not rounded or smoothed edges), at the entrance and the exit of each the orifice 131, respectively formed at the junction between the orifice passage and a transversely extending upstream and downstream face of the flow second restrictor 123. These sharp edges are intended to maximize pressure loss and thus maximize the ability of the orifices 131, and thus the second flow restrictor 123, to reduce the velocity of the core airflow 118 passing therethrough. However, in certain alternate embodiments, radiused or chamfered edges at entrance of orifice 131 can be used if higher discharge coefficients are desirable for more through flows but less pressure losses.

When arranged in this manner, the first and second flow restrictors 121, 123 placed in series within the core air passage 103 act to maximize the obstruction of the core air flow 118, thereby slowing it down by increasing pressure losses through the orifices and the impact of the flow impingement, and thereby permitting a better control over the core air flow existing through the core air outlet 107 at the nozzle tip 108.

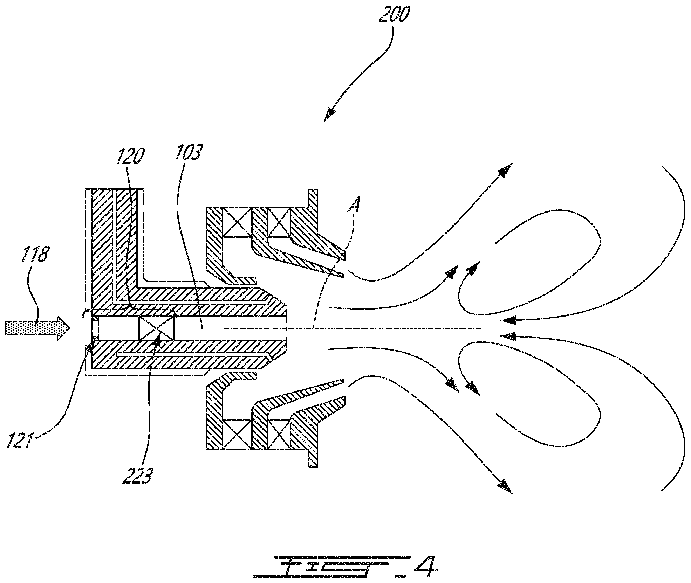

Referring now to Fig. 4, a fuel nozzle 200 in accordance with another embodiment is shown. The fuel nozzle 200 is a "high shear" type fuel nozzle similar to the fuel nozzle 100 of Fig. 2, and therefore like elements will not be re-described for the sake of simplicity and a full description will not be repeated in great detail, again, except where relevant differences exist. The fuel nozzle 200 includes two flow restrictors 120 disposed in series within the core air passage 103 of the nozzle body. The first, or upstream, flow restrictor 121 may be the same as that in the fuel nozzle 100. A difference between the fuel nozzle 200 and that fuel nozzle 100, is that the fuel nozzle 200 includes a different second flow restrictor 223. The second flow restrictor 223 comprises a core air swirler, which is configured to impart a swirl (e.g. in a tangential direction relative to axial central axis A) to the core air flow 118, downstream of the second flow restrictor 223. While it imparts swirl on the core air flow, the second flow restrictor 223 nevertheless operates as per the second flow restrictor 123 (e.g. a flat plate restrictor, for example) of the fuel nozzle 100. The core air swirler nevertheless acts as a flow restrictor, in much the same way as the other flow restrictors described herein, in addition to imparting swirl to the core airflow.

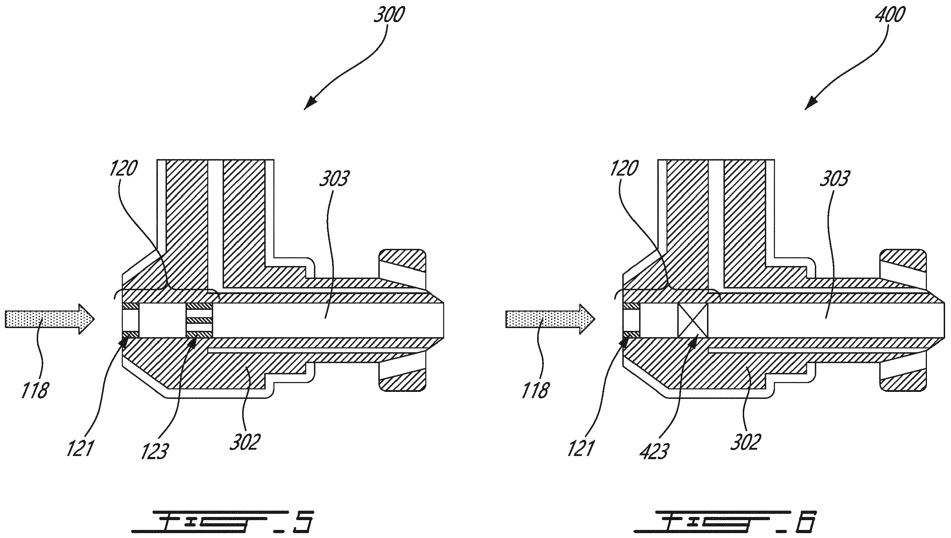

Referring now to Fig. 5, a fuel nozzle 300 of the "airblast" type is shown. Although such airblast fuel nozzles differ somewhat from the "high shear" type fuel nozzles (such as the fuel nozzle 100 of Fig. 2, for example), this nevertheless still include a nozzle body 302 through which is defined a core air passage 303 that is centrally disposed therewithin and extends axially through the nozzle body 302, in much the same way that the core air passage 103 extends through the nozzle body 102 of the fuel nozzle 100. Many features of the fuel nozzle 300 will be similar to those of the fuel nozzle 100, and therefore like elements will not be re-described with respect to the fuel nozzle 300 of Fig. 5 for the sake of simplicity. Much as per the fuel nozzle 100, the fuel nozzle 300 also includes two flow restrictors 120 (and more particularly the first, or upstream, flow restrictor 121 and the second, or downstream, flow restrictor 123) disposed in series within the core air passage 303 of the nozzle body 302 of the airblast fuel nozzle 300. The airblast fuel nozzle 300, and more specifically the flow restrictors 120 within the core air passage 303, otherwise operates as per the shear fuel nozzle 100 described above with reference to Fig. 2.

Fig. 6 depicts another airblast fuel nozzle 400, much like the airblast type fuel nozzle 300. The airblast fuel nozzle 400 remains similar to the other fuel nozzles described herein, and therefore like elements will not be re-described for the sake of simplicity. The fuel nozzle 400 also includes two flow restrictors 120 disposed in series within the core air passage 303 of the nozzle body 302. The first, or upstream, flow restrictor 121 may be the same as that in the fuel nozzles 100, 200 and 300. A difference between the fuel nozzle 400 and the fuel nozzles 100 and 300, is that (much like fuel nozzle 200) the fuel nozzle 400 includes a core air swirler that acts as the second flow restrictor 423. Stated differently, the second flow restrictor 423 comprises in this embodiment a core axial air swirler. The second flow restrictor 423 thus comprises a core axial air swirler as per the second flow restrictor 223 of nozzle 200, which is similarly configured to impart a swirl (e.g. in a tangential direction relative to the direction of the core air flow 118 through the core air passage 303), downstream of the second flow restrictor 423. While it imparts swirl on the core air flow, the second flow restrictor 423 nevertheless operates as per the second flow restrictor 123 (e.g. a flat plate restrictor, for example) of the fuel nozzle 100.

In all of these embodiments, a fuel nozzle for an aircraft engine is provided which has a central core air passage with at least two flow restrictors in series within the core air passage, which act to reduce the velocity of the core air flow and thus may be used to help provide improved stability of the flame produced by the fuel nozzle. Each flow restrictor has one or more orifices therein, wherein the one or more orifices of an upstream one of the at least two flow restrictors are offset from the one or more orifices of a downstream one of the at least two flow restrictors.

In operation, the fuel nozzles 100, 200, 300, 400 as described herein may be used as part of a method to deliver fuel into the combustor 16 of the aircraft engine 10. This method may include, a step of directing fuel from a fuel source to a nozzle tip of the fuel nozzle, and directing a core air flow through the core air passage 103, 303 extending through a body of the fuel nozzle. Within the core air passage 103, 303, the method further includes reducing a velocity of the core air flow by restricting the core air flow using at least two flow restrictors 120 disposed in series within the core air passage 103, 303.

All of the fuel nozzles described herein will be understood by one skilled in the art to include the required fuel passageways, which extend through the fuel nozzles at appropriate locations such as to provide a fuel flow for ignition. These fuel passageways may include, for example only, primary and secondary fuel passages, which provide fuel flow communication between a fuel manifold or other suitable fuel source and the fuel ejection orifices in the nozzle tips. Additionally, it is to be understood that upstream ends of each of the fuel nozzles described herein are connected to sources of pressurised fuel and air, as is well known.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, although the depicted embodiments include two flow restrictors 120, it is to be understood that fewer (e.g. only one flow restrictor) or more flow restrictors (e.g. three or more) may be used, such as to achieve a desired level of restriction in the core air flow. Additionally, while all flow restrictors require one or more air flow passages therethrough (such as to permit at lease some core air flow therethrough), the number, shape, size and/or positioning of these air flow passages through the flow restrictors, and the profile of the restrictor edges (e.g. sharp, radiused or chamfered, etc.), may be selected as required. Yet further modifications could be implemented by a person of ordinary skill in the art in view of the present disclosure, which modifications would be within the scope of the present technology.

## Claims

1. A fuel nozzle (100) for a combustor (16) of an aircraft engine (10), comprising:
a nozzle body (102) defining an axial central axis (A) and having an outlet end at least partially defining a nozzle tip (108);
a fuel passage (106) extending through the nozzle body (102) between a fuel inlet and a fuel outlet located at the outlet end, for directing a fuel flow into the combustor (16) via the nozzle tip (108);
a core air passage (103) extending through the nozzle body (102) between a core air inlet (105) and a core air outlet (107) located at the outlet end, for directing a core airflow into the combustor (16) via the nozzle tip (108); and
at least two flow restrictors (120) disposed in series within the core air passage (103), the at least two flow restrictors (120) including an upstream flow restrictor (121) and a downstream flow restrictor (123) each having an orifice (130) therein, the orifice (130) defining a restricted air flow passage through a respective one of the at least two flow restrictors (120), the restricted airflow passage having a cross-sectional area smaller than that of the core air passage (103), the orifice (130) in the upstream flow restrictor (121) being at least partially offset from the orifice (130) in the downstream flow restrictor (123).

2. The fuel nozzle (100) of claim 1, wherein the orifice (130) in the upstream flow restrictor (121) and the orifice (130) in the downstream flow restrictor (123) are radially and/or circumferentially offset.

3. The fuel nozzle (100) of claim 1 or 2, wherein the orifice (130) in the upstream flow restrictor (121) and the orifice (130) in the downstream flow restrictor (123) are entirely offset such that substantially all air flowing out of the orifice (130) in the upstream flow restrictor (121) will impinge upon a solid surface of the downstream flow restrictor (123).

4. The fuel nozzle (100) of any preceding claim, wherein the downstream flow restrictor (123) has multiple orifices (131) therein, the multiple orifices (131) being at least partially offset from the orifice (130) in the upstream flow restrictor (121).

5. The fuel nozzle (100) of claim 4, wherein each of the multiple orifices (131) in the downstream flow restrictor (123) is entirely offset from the orifice (130) in the upstream flow restrictor (121).

6. The fuel nozzle (100) of claim 4 or 5, wherein each of the multiple orifices (131) in the downstream flow restrictor (123) has a cross-sectional area that is equal to or smaller than a cross-sectional area of the orifice (130) in the upstream flow restrictor (121).

7. The fuel nozzle (100) of any of claims 4 to 6, wherein the orifice (130'; 130") in the upstream flow restrictor (121) is centrally disposed within the core air passage (103), and the multiple orifices (131) in the downstream flow restrictor (123) are located radially outward relative to the orifice (130'; 130") in the upstream flow restrictor (121).

8. The fuel nozzle (100) of any of claims 4 to 7, wherein the multiple orifices (131) in the downstream flow restrictor (123) are circumferentially equally spaced apart.

9. The fuel nozzle (100) of any preceding claim, wherein the downstream flow restrictor (123) is located within the core air passage (103) an axial distance (G) away from the upstream flow restrictor (121), the axial distance (G) corresponding to 1 to 5 times a maximum dimension of the upstream flow restrictor (121), the axial distance (G) being optionally 2 to 4 times the maximum dimension of the upstream flow restrictor (121) or about 3 times the maximum dimension of the upstream flow restrictor (121).

10. The fuel nozzle (100) of any preceding claim, wherein the upstream flow restrictor (121) and the downstream flow restrictor (123) are both located within an upstream half of the core air passage (103), between the core air inlet (105) and an axial midpoint (125) of the core air passage (103).

11. The fuel nozzle (100) of any preceding claim, wherein the orifice (130) has a sharp edge located at an entrance and/or an exit of the orifice (130).

12. The fuel nozzle (100) of any preceding claim, wherein the orifice (130) has a radiused or chamfered edge at an entrance and/or an exit of the orifice (130).

13. The fuel nozzle (200) of any preceding claim, wherein the downstream flow restrictor (123) comprises a flow swirler (123).

14. An aircraft engine (10) comprising:
a combustor (16); and
a plurality of the fuel nozzles (100) of any preceding claim.

15. A method for delivering fuel into a combustor (16) of an aircraft engine (10) using a fuel nozzle (100), the method comprising:
directing fuel from a fuel source to a nozzle tip (108) of the fuel nozzle (100);
directing a core airflow (118) through a core air passage (103) extending through the fuel nozzle (100); and
within the core air passage (103), reducing a velocity of the core air flow (118) by restricting the core airflow (118) using at least two flow restrictors (120) disposed in series within the core air passage (103), the at least two flow restrictors (120) respectively including an upstream orifice (130) and a downstream orifice (130), and decreasing a pressure drop across the downstream orifice (130).
